(19) **Europäisches Patentamt**
**European Patent Office**
**Office européen des brevets**

(11) **EP 1 856 856 B1**

(12) **EUROPEAN PATENT SPECIFICATION**

(45) Date of publication and mention
of the grant of the patent:
**30.12.2009 Bulletin 2009/53**

(51) Int Cl.:
**H04L 12/56** (2006.01)

(21) Application number: **06710001.6**

(22) Date of filing: **03.03.2006**

(86) International application number:
**PCT/GB2006/000780**

(87) International publication number:
**WO 2006/095148 (14.09.2006 Gazette 2006/37)**

(54) **ROUTE SELECTION IN MULTI-HOP CELLULAR NETWORK**

ROUTENAUSWAHL IN EINEM ZELLULAREN MEHRSTROMNETZWERK

SELECTION DE ROUTES DANS UN RESEAU CELLULAIRE MULTISAUT

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2005 EP 05251348**

(43) Date of publication of application:
**21.11.2007 Bulletin 2007/47**

(73) Proprietor: **BRITISH TELECOMMUNICATIONS public limited company**
**London**
**EC1A 7AJ (GB)**

(72) Inventors:
• **BAPPU, Benjamin**
**Ipswich,**
**Suffolk IP5 2EB (GB)**
• **TAY, Hui Min June**
**Ipswich,**
**Suffolk IP5 2WW (GB)**

(74) Representative: **Nash, Roger William et al**
**British Telecommunications plc**
**Intellectual Property Department**
**PPC5A**
**BT Centre**
**81 Newgate Street**
**London, EC1A 7AJ (GB)**

(56) References cited:
• HAO ZHU ET AL: "On improving the performance of IEEE 802.11 with multi-hop concepts" COMPUTER COMMUNICATIONS AND NETWORKS, 2003. ICCCN 2003. PROCEEDINGS. THE 12TH INTERNATIONAL CONFERENCE ON DALLAS, TX, USA 20-22 OCT. 2003, PISCATAWAY, NJ, USA,IEEE, 20 October 2003 (2003-10-20), pages 151-156, XP010695711 ISBN: 0-7803-7945-4
• SRENG V ET AL: "Coveragege enhancment through two-hop relaying in cellular radio systems" THESIS, XX, XX, 2002, pages 24-39, XP002986110
• SRENG V ET AL: "Relayer selection strategies in cellular networks with peer-to-peer relaying" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1949-1953, XP010702827 ISBN: 0-7803-7954-3
• DOUGMEI ZHAO ET AL: "Cellular CDMA capacity improvement using ad hoc relaying" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 1, 5 September 2004 (2004-09-05), pages 719-723, XP010754731 ISBN: 0-7803-8523-3

EP 1 856 856 B1

## Description

The present invention relates to a wireless network and to a method of operating a communications network.

The well known expression for the maximum data rate that can be achieved in a noisy communication channel (the so-called Shannon limit) is given by the following expression:

$$ChannelCapacity = Bandwidth * \log_2 (1 + S/N)$$

Where S/N is the ratio of the power in the communication signal to the power in the noise distorting the signal.

Since the power in an electromagnetic signals falls off with the square of the distance over which the wave has travelled, it follows that the maximum data rate achievable between two communicating nodes of a wireless network tends to decrease with distance.

In order to conserve battery power in mobile communication devices, it is known to reduce the transmitter power of a mobile communications device operating at a fixed bit-rate as it gets closer to a corresponding receiver. An example of this is seen in the second-generation mobile telephony standard, GSM.

All communication in GSM is between mobile devices and base stations. Wireless Local Area Networks (WLANs) operating in accordance with the IEEE 802.11 standard have a similar mode of operation (known as 'infrastructure mode') and also a further mode of operation known as ad-hoc mode. In ad-hoc mode, mobile devices can forward signals on behalf of other mobile devices - this is known as relaying.

The potential improvements in throughput which achievable by relaying are discussed in a paper entitled 'On Improving the Performance of IEEE 802.1.1 with relay-enabled PCF' by Hao Zhu and Guohong Cao published in the journal Mobile Networks and Applications, vol. 9, pp 423-434.

Zhu and Cao give an example where the use of an intermediate relay node between a sender node and a receiver node results in an increased throughput between the sender node and receiver node. This improvement can be predicted since a relay half-way between the sender node and the receiver node will experience a higher signal-to-noise ratio than the receiver - thus enabling a higher bit-rate to be achieved for a given transmitter power. A similar benefit is experienced in the next leg of the communication between the relay node and the receiver node.

Zhu and Cao's method for selecting a relay node relies on the access point learning from communications between the mobile devices in the wireless network, the bit-rate which any pair of mobile devices are using to communicate with one another. Then, before polling a particular mobile device to allow it a chance to send data, the access point exhaustively considers the direct route and all possible two-hop routes between the mobile device and the access point, selects the one which offers the highest throughput, and then indicates the route and the transmission rate for the first hop to the mobile devices.

This proposal is similar to that put forward by the authors in a earlier paper, entitled "On improving the performance of 802.11 with multi-hop concepts" which appeared in the proceedings of the 12th international conference on Computer Communications and Networks, 2003.

In a thesis dated 2002, Van Morning Sreng considers the advantages and disadvantages of various relay selection methods.

Zhu and Cao's proposal does not address an important problem in mobile devices - namely the preservation of battery power. In addition to that a lot of signalling is introduced in order that the access point might learn the bit-rates between all the potential pairs of mobile terminals.

Power management is, however, mentioned as one of the benefits of multi-hop cellular networks in the paper 'A Charging and Rewarding Scheme for Packet Forwarding in Multi-Hop Cellular Networks' found in the proceedings of the 4th ACM MobiHoc conference at pages 13-24, 2003 and also in the paper 'The Case for a Multi-hop Wireless Local Area Network' presented at IEEE Infocom, Hong Kong, March 2004 by Seungjoon Lee, Suman Banerjee, and Bobby Bhattacharjee.

A multi-hop cellular network is one which takes advantage of a fixed wireless transceiver (base station, access point or the like) and also relaying capabilities offered by mobile wireless transceivers.

The latter paper suggests that the multi-hop path from a sender device to the access point be computed by having each device keep track of the bandwidth of the (possibly multi-hop) link between itself and the access point. Each device periodically advertises this 'end-to-end' bandwidth. In addition, each sending device finds the bandwidth of the first hop by monitoring various operational parameters and thereby estimating its bandwidth through to the access point. Each device also estimates the bandwidth available between it and each sender it hears.

When a device is able to establish, on the basis of a senders 'end-to-end' bandwidth advertisement, and its knowledge of its 'end-to-end' bandwidth and the bandwidth between it and the sender, that it could enter into the chain of links linking the sender to the access point and improve the 'end-to-end' bandwidth, the device sends a ForwardProxyBid message to the sender. The sender can then reply with a ForwardProxyAccept message and start sending future packets through the new proxy device.

A problem with the scheme put forward by Lee at al is that it places a heavy processing burden on each of the devices in the multi-hop cellular network. This is a particular problem if the devices have little power (either generally, or because their battery is running low).

According to the present invention there is provided a multi-hop cellular network comprising:

a plurality of mobile wireless transceivers;

a fixed wireless transceiver providing wireless communication with at least some of said mobile wireless transceivers, said fixed wireless transceiver being arranged in operation to monitor characteristics of its links with all or a subset of said mobile wireless transceivers;

said fixed wireless transceiver being arranged in operation to:

i) select between said candidate two-hop routes from said first wireless transceiver on the basis of said characteristics of its links with said candidate mobile wireless transceivers;

ii) indicate to said first wireless transceiver which of said candidate mobile transceivers is thus selected.

By arranging a fixed wireless transceiver in a multi-hop cellular network to select between candidate two-hop routes, from a first mobile wireless transceiver via candidate second mobile wireless transceivers to a fixed wireless transceiver, in dependence on monitored characteristics of its links with said candidate second mobile wireless transceivers, the amount of processing and signalling required in order to select a relay in a multi-hop cellular network is reduced.

Preferably, said mobile wireless transceivers are arranged in operation to exchange relay signalling messages and to identify to said fixed wireless transceiver candidate two-hop routes from a first mobile wireless transceiver via respective candidate mobile wireless transceivers to said fixed wireless transceiver. This has the advantage that only two-hop routes involving a mobile wireless transceiver which wishes to have data relayed and those mobile wireless transceivers which wish to offer relaying services need be considered in making said selection, thereby reducing the processing required in order to select a candidate two-hop route to the fixed wireless transceiver.

In networks where the transceivers can send at different data-rates, the above method has the further advantage that the sending wireless transceiver can send a relay request message at a high data-rate and in that way limit the candidate relay transceivers to those which have a sufficiently good link to the sending wireless transceiver to be able to successfully read the relay request message. This, in combination with the fixed wireless transceiver's selection of a relay on the basis of the quality of the second hop of the two-hop route is enough to ensure that the overall two-hop route is of the desired quality. Similar considerations apply where the transceivers can send at different transmission powers. Again, by sending a low-power relay request, the sender can ensure that only relays which will require a low expenditure of battery power by the sender are considered by the fixed wireless transceiver as candidate relay nodes.

There now follows, by way of example, a description of specific embodiments of the present invention, with reference to and as illustrated in the accompanying drawings in which:

Figure 1 shows a wireless local area network;

Figure 2 shows the format of a data frame sent by devices in the wireless local area network of Figure 1;

Figure 3 is a link table showing the physical characteristics of the data link between pairs of devices in the wireless local area network of Figure 1;

Figure 4 is a relay table maintained by the access point of the wireless LAN of Figure 1;

Figure 5 is a flow-chart of a process carried out by one of the devices in the wireless LAN when a relay is desired;

Figures 6A and 6B show processes carried out by a relay node;

Figures 7A - 7D show processes concerned with relaying carried out by the access point.

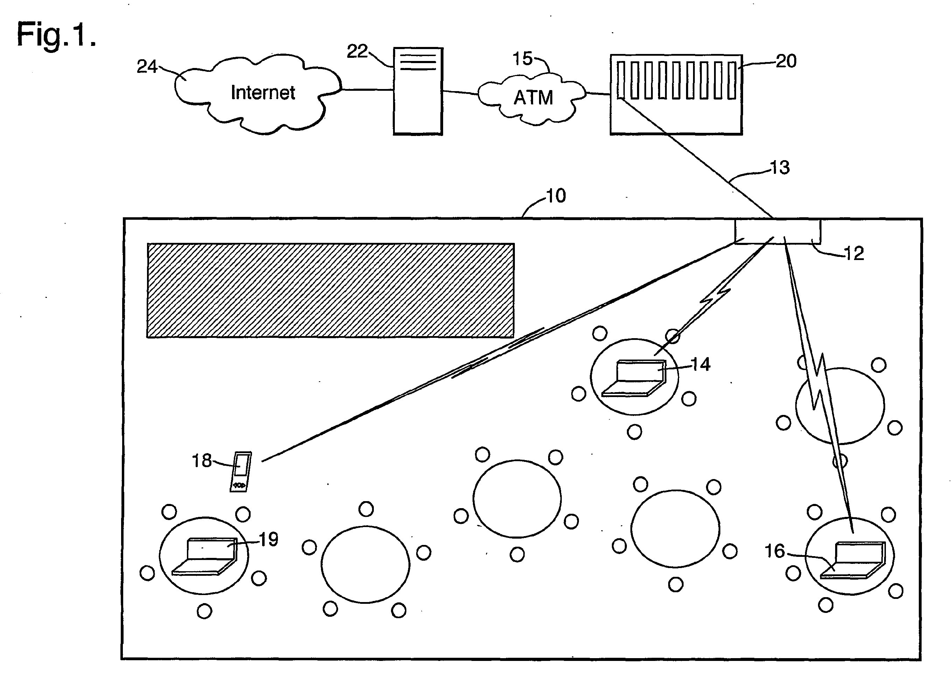

Figure 1 shows an 802.11b wireless LAN installed in a building 10 to provide a 'hot-spot' of the type now commonly found in airport lounges, within office buildings and at cafes and the like.

The LAN is provided using an access point 12 located inside the building 10, that access point 12 being connected via a broadband Digital Subscriber Link (DSL) connection 13 to a DSLAM 20 (DSL Access Multiplexer) operated by a local internet service provider. The DSLAM 20 is In turn connected via a wide area network 15 to a server computer 22 providing a link to the internet 24. The devices outside the building 10 are configured and connected in a conventional manner which will be familiar to those that provide Internet connectivity. In particular, the server computer 22 is responsible for generating charging data for and authenticating users of the wireless LAN.

Within the building 10, four wireless devices 14,16,18,19 are connected to the Internet 24 via a radio link from them to the access point 12. Three of these wireless devices are laptop PC-compatible personal computers 14,16,19 equipped with a BT Voyager 1060 Laptop Adapter available from British Telecommunications plc. The software in those personal computers is modified to cause them to carry out the additional functionality described below.

The fourth wireless device 18 is a mobile communicator - such as a Nokia 9500 communicator which operates in accordance with the 802.11 b standard, but additionally has enhanced operating software in order to incorporate the advanced functionality of the embodiments described below.

The access point is also compatible with the 802.11 b standard, and has enhanced operating software as will be described below.

Those skilled in the art of designing such access points and wireless devices will have little difficulty in altering their products to accord with the specifications that follow.

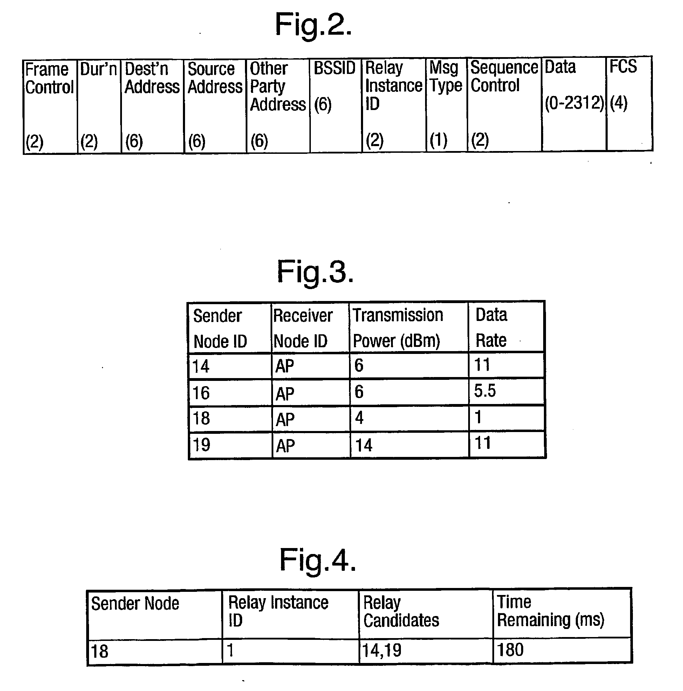

Figure 2 shows the form of a frame used in the present embodiment. This is similar to the standard format of a frame in an 802.11 network but further includes:

   i) an 'Other Party Address' field which contains a MAC address of the same format used in the Sender Address and Receiver Address fields;

   ii) a 'Relay Instance ID' - an identifier which indicates to which relay instance the frame relates; and

   iii) a 'Msg Type' which indicates the nature of the transmission.

Figure 3 shows a table of link characteristics maintained by the access point 12. The access point 12 attempts to send data to the devices 14,16,18,19 at the maximum 802,11 b data rate, namely 11 Mbps. If it receives acknowledgements from them, then it knows the signal was sent with sufficient power. Since the access point is provided with mains power it simply increases its power to a point where it can successfully transmit to all devices In the wireless local area network at 11 Mbps.

Each device 14,16,18,19 communicating with the access point will undergo a similar procedure in order to select a transmission rate for communications with the access point. However, since those devices are operating on battery power, they are more likely to accept a lower transmission rate than to raise their transmission power in order to achieve at higher data rate. The access point records these transmission rate and powers in its link table (Figure 3).

The access point 12 also maintains a relay table (Figure 4). Each entry in this table has a relay instance ID (second column), a sender node ID (first column), a list of relay candidates (those relay candidates being identified by their node ID - third column), and a timer which counts down in real time.

Via a user interface, each device 14,16,18,19 can:

   a) elect whether to offer its services as a relay, and

   b) elect to request its transmissions to be relayed towards the access point under predetermined conditions (for example on the battery charge falling below a predetermined threshold).

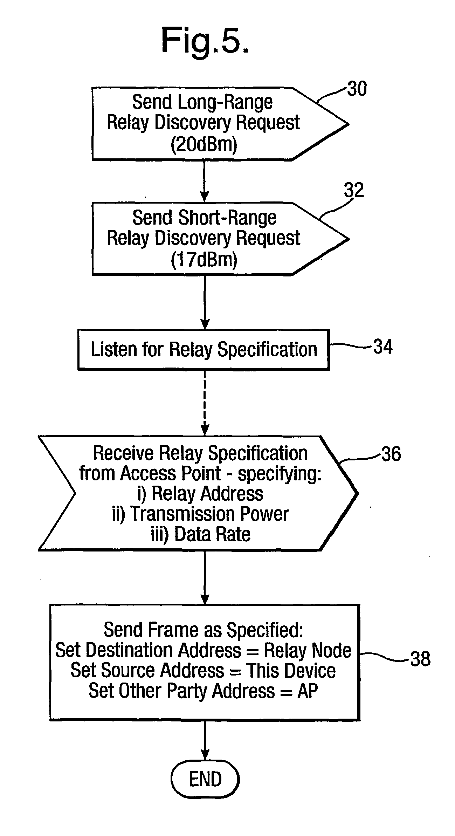

If relaying is to be requested, then the device 14,16,18,19 will follow the procedure shown in Figure 5. For the purposes of the example below, it is assumed here that it is the Nokia Communicator 9500 (18) which is requesting that its transmissions be relayed to the access point 12.

The relay request procedure begins with the transmission of a long-range relay discovery request at full power (step 30). Since the network is sized such that the access point 12 is in range of all the wireless devices 14,16,18,19 associated with the access point 12, this message will be received by the access point 12, and any devices as close as, or closer to the sending device than the access point 12. The long-range relay discovery message is of the format shown in Figure 2 and therefore includes the sender address, a relay instance ID (which is a number incremented by 1 by the device 18 for each separate relay request it makes), and a message type which indicates that the message is a long-range relay discovery message.

The device then reduces its transmission power to half its original value and sends a short-range transmission request (step 32). This might initially be sent at the highest possible data rate (11 Mbps) and then stepped down through the other available transmission rates (5.5, 2, 1 Mbps) should no relay be offered. Each of the short-range transmission request messages is similar in format to the previous long-range relay discovery messages (and have the same relay instance ID), but they have a message type value which indicates that they are short-range relay discovery requests.

Having sent the short-range relay discovery request (step 32), the device 18 then listens (step 34) for a relay specification from the access point 12.

When the access point 12 replies with a relay specification having the same relay instance ID (step 36), the device 18 reads the relay specification and sends (step 38) a frame to the relay device in the format illustrated in Figure 2. In that frame, the 'Other Party Address' field contains the MAC address of the access point 12, and the relay instance ID is again that used in the relay specification message.

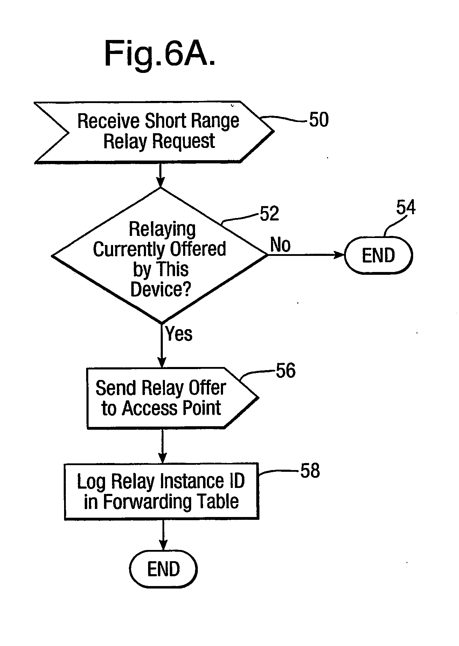

On receipt of a Short-Range Relay Discovery Request (Figure 6A, step 50), a node checks (step 52) to see whether its user has indicated that he/she wishes the node to offer relays (it is anticipated that a user might be motivated to do this by the Internet Service Provider - perhaps by offering that user extra access time or cheaper subscription fees). If relaying is not offered by the node, then it simply does nothing (step 54).

If, on the other hand, relaying is offered by this node, then the node transmits (step 56) a relay offer to the access point 12. Such a relay offer is again in the format shown in Figure 2, and contains the same relay instance ID seen in the short-range relay discovery request. It also has the message type field set to a value which indicates that the frame is a relay offer.

Once that message is acknowledged, the node enters (step 58) the offer (which is identified by the relay instance ID) into a forwarding table storing all the relay offers which have been made by this node and acknowledged by the access point. The forwarding table further includes a forwarded flag (initially set to FALSE) which indicates whether the node has actually forwarded a data frame with that relay instance ID to the access point 12. The reason for doing this is to ensure that the node is fairly credited by the Internet Service Provider for any frames it relays to the access point 12.

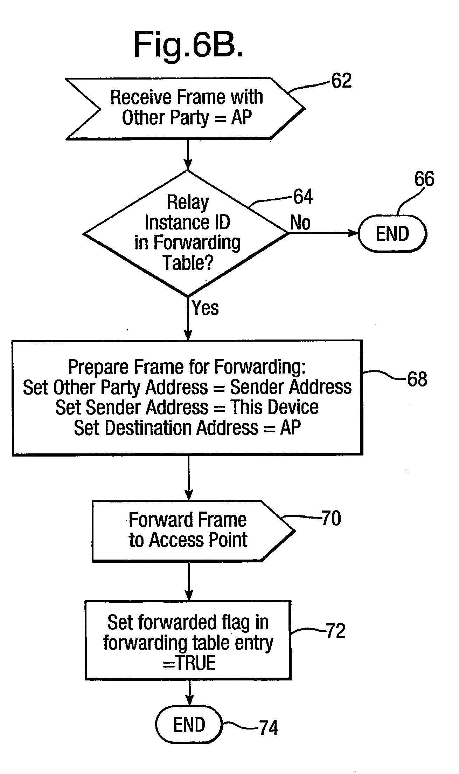

On receiving (Figure 6B, step 62) a frame having the 'Other Party Address' field set to the MAC address of the access point 12, the node reads the relay instance ID from the incoming frame and compares (step 64) the value with the values in its forwarding table. If the entry is not present, then the node does nothing further (step 66). If the entry is present, then the node prepares the frame for forwarding (step 68). To do so, it sets the sender and recipient address as normal, but also sets the 'Other Party Address' field to the address of the original sender, It then forwards the relay frame (step 70) and sets (step 72) the forwarded flag for the corresponding entry in its forwarding table to TRUE. Thereafter, the forwarding process (Figure 6B) ends (step 74).

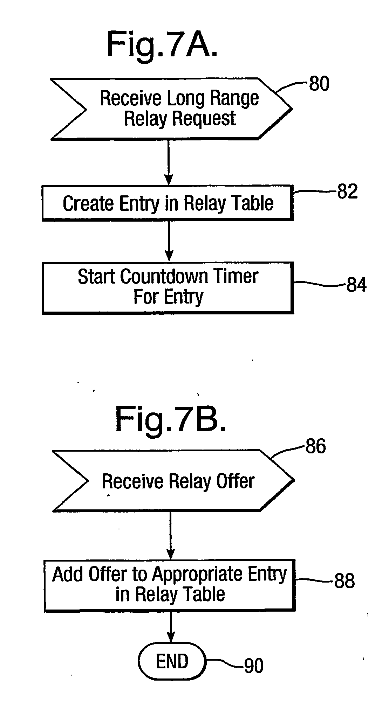

The processing carried out by the access point 12 in the present embodiment will now be described by reference to Figures 7A to 7D.

On receiving a long-range relay request message (Figure 7A, step 80), the access point creates (step 82) an entry in its relay table (Figure 4) corresponding to the Information in that long-range relay request. In particular, it labels the entry with the sender node ID (i.e. its MAC address) and the relay instance ID provided by the sender node. The third column is initially empty and the fourth column is initially set to 250ms and begins counting down immediately (step 84).

In the time period for which that countdown is running, it is hoped that one or more nodes will follow the procedure of Figure 6A and 'thereby offer to relay frames on behalf of the relay requester. In the present example, it is assumed that the relay requester is the Nokia Communicator 9500 and that two relay offers are made - one by the laptop 14, the other by the laptop 19. The process for handling a relay offer is shown in Figure 7B.

The process begins with the receipt of a relay offer (step 86). By examining the other party address field and the relay instance ID field, the access point 12 is able to identify the relay request to which the relay offer relates. Having identified the correct entry (row) in the relay table, the access point updates (step 88) the candidate relay list (in the third column of the relay table - Figure 4) with the MAC address of the sender of the relay offer frame. Thereafter, the process ends (step 90).

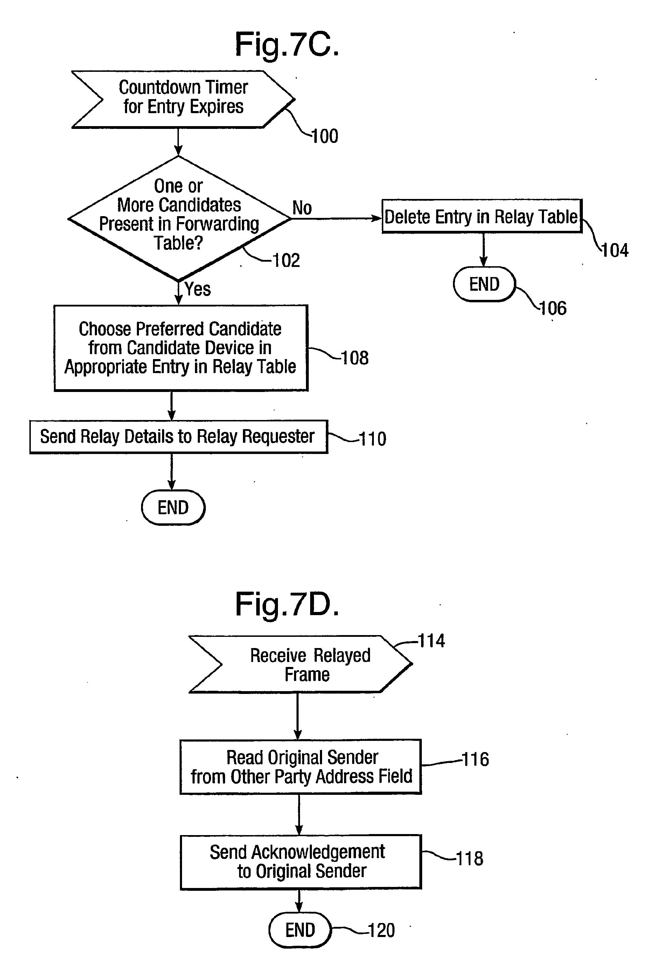

Whenever the countdown timer for a particular entry in the relay table (Figure 4) expires (Figure 7C step 100), the access point first finds (step 102) whether the list of candidate relay nodes (Figure 4 - third column) is empty. If it is, then the corresponding entry In the relay table is deleted (step 104) and the process ends (step 106). If one or more candidates are listed then the access point selects (step 108) a preferred candidate as follows. If the list has only one entry, then the corresponding node is selected as the relay node. If more than one candidate relay node is present, then the access point finds the node(s) with the highest data rate link to the access point (from the link table - Figure 3). If there is just one such node, then that node is selected. If, however, more than one candidate node remains, then the candidate node with the lowest transmission power is selected (this being the node which will offer least interference to other nodes in the network). Thus, In the present example, where 18 requests a relay, and nodes 14 and 19 offer themselves as relays, the access point notes that both offer an 11 Mbps rate on the second-hop, and then resolves the tie by choosing the relay node with the lowest transmission power, namely laptop 14.

Once the preferred relay node is chosen, the details of that relay node are sent (step 110) to the relay requester (in this case Nokia Communicator 19) which then reacts as shown in the latter half of Figure 5, the relay node receiving the frame sent from the Nokia Communicator 19 then in turn handling the frame as explained above in relation to Figure 6B and forwarding to the access point 12.

Finally, the access point 12 handles the relayed frame as shown in Figure 7D. On receiving the frame (step 114), it reads (step 116) the original sender's ID (i.e. its MAC address) from the 'Other Party Address' field in the relayed frame - perhaps packetising the frame and sending it onwards towards the Internet 24 - and sends an acknowledgement (step 118) to the original sender (the Nokia Communicator 18 in this example). Thereafter the process ends (step 120).

It will be seen how a wireless network operating In accordance with the above described embodiment selects a two-hop route for transmission from a mobile wireless node (18) via another wireless node (14) solely on the basis of characteristics of the link between the other wireless node (14) and the access point (12). Furthermore, by only considering, on-demand, routes which begin at a wireless node which has indicated that it desires its data to be relayed, the amount of processing associated with relaying in the network is reduced. Similarly, the amount of processing is also reduced by only considering candidate nodes (14,19) which are prepared to offer a relay service and are in range of the access point (12). Yet further, by selecting only those nodes which can read the lower power / higher rate relay request message as candidates for ultimately being selected as the relay node, the signalling and processing required to select a node is reduced in comparison to the prior-art.

In the above embodiment, selection between candidate two-hop routes was made primarily on the basis of the transmission rate between the candidate relays (14,19) and secondly on the basis of the transmission power of the candidate relays in communicating with the access point (12). This has the advantage that the throughput via the relay is maximised In relation to the second of the two hops to the access point (12). Once that consideration is taken into account, the candidate which presents the least interference to other devices in the network was chosen. This has the advantage that the throughput of the network as a whole is maximised.

It would of course be possible to consider these two factors in the other order should it be felt that maximizing global throughput is more important that maximizing the throughput of the selected two-hop route. In other cases, each of the two factors could be considered alone.

In an alternative embodiment, the received signal strength indication could be included in the link table (Figure 3). Selection could then be of the two-hop route which offers the maximum received signal strength, thereby tending to prefer relay nodes which are close to the access point (12).

In order to provide an incentive to users to offer relaying to other users, the AP processing in Figure 7D could include the sending of a credit message to the server 22 to credit the account of the relaying node with an amount of money, or extend the length of the relaying node's fixed fee session, for example. It will be seen that having the access point decide on the relaying node means that an Incentive framework to motivate nodes to be relays and allow distant nodes to find the optimal relay is easily to implement.

The above embodiments initiate relay selection through a relay discovery process, which uses the different data rates to optimally discover the relays. Indirectly, the embodiments use the result of the "path loss" (i.e. if high data rate message cannot be decoded, then the node is too far) as a basis to select relays - this is an efficient way of, in effect, taking path loss into account without requiring the maintenance and accessing of data structures storing path loss values for the various links available in the network. The embodiments use the MAC layer monitoring of the received messages to determine the appropriate date rates. In summary, the embodiments provide a practical protocol for relay selection, as its not possible to have a global view of all the path losses among nodes without extensive message exchanges.

Although the above described embodiment referred to an 802.11 wireless LAN it is to be understood that the invention can also be applied in a variety of other wireless network which allow nodes to relay messages on behalf of other nodes.

## Claims

1. A multi-hop cellular network comprising:

   a plurality of mobile wireless transceivers (14,16,18,19);
   a fixed wireless transceiver (12) providing wireless communication with at least some of said mobile wireless transceivers (14,16,18,19), said fixed wireless transceiver (12) being arranged in operation to monitor characteristics of its links with all or a subset of said mobile wireless transceivers (14,16,18,19);
   said fixed wireless transceiver (12) being arranged in operation to:

      i) select between candidate two-hop routes from a first mobile wireless transceiver to said fixed wireless transceiver (12) on the basis of said characteristics of its links with mobile wireless transceivers (14,16,18,19) which are candidates for relaying data from said first wireless transceiver to said fixed wireless transceiver (12);

ii) indicate to said first wireless transceiver which of said candidate mobile wireless transceivers (14,16,18,19) is thus selected;

said mobile wireless transceivers (14,16,18,19) being arranged in operation to exchange relay signalling messages and to identify to said fixed wireless transceiver (12) candidate two-hop routes from said first mobile wireless transceiver via respective candidate mobile wireless transceivers (14,16,18,19).

2. A network according to claim 1 in which said mobile wireless transceivers (14,16,18,19) are arranged to exchange relay messages by having a first mobile wireless transceiver (14,16,18,19) being arranged in operation to send a relay request message to one or more of said mobile wireless transceivers (14,16,18,19), and having one or more of said mobile wireless transceivers (14,16,18,19) being arranged in operation to send a relay offer message responsive to receiving said relay request message, said fixed wireless transceiver (12) being arranged to receive said relay offer message.

3. A network according to claim 1 wherein said mobile wireless transceivers (14,16,18,19) can send data at a plurality of different data-rates, said characteristics monitored by said fixed wireless transceiver (12) including the data-rate at which each mobile wireless transceiver (14,16,18,19) operates, and said selection between candidate two-hop routes by said fixed wireless transceiver (12) being dependent at least in part on the data-rate used by said candidate mobile wireless transceivers (14,16,18,19) in communicating with said fixed wireless transceiver (12).

4. A network according to claim 1 or 2 wherein said mobile wireless transceivers (14,16,18,19) can transmit signals at a plurality of different transmission powers, said characteristics monitored by said fixed wireless transceiver (12) including the signal power with which each mobile wireless transceiver (14,16,18,19) is transmitting to said fixed wireless transceiver (12) or the power of the signal received from each mobile wireless transceiver (14,16,18,19) at the fixed wireless transceiver (12), said selection between said candidate two-hop routes being dependent at least in part on:

i) the transmission power employed by said candidate mobile wireless transceivers (14,16,18.19) in communicating with said fixed wireless transceiver (12); or
ii) the power of the signal received from said candidate mobile wireless transceivers (14,16,18,191 when communicating with said fixed wireless transceiver (12).

5. A network according to claim 1 in which said mobile wireless transceivers (14,16,18,19) offer a user interface which allows users to opt-out of offering relaying to other mobile wireless transceivers (14,16,18,19).

6. A network according to claim 1 further comprising a user account server connected to said fixed wireless transceiver (12), said user account server crediting the account of the user of a mobile wireless transceiver (14,16,18,19) which relays data for users of other mobile wireless transceivers (14,16,18,19) with a discount on the amount due or an increase in the amount of data which the relaying user can send and/or receive in a given time period.

7. A network according to claim 1 in which relaying is enabled only in an upstream direction.

**Patentansprüche**

1. Zellulares Multihop-Netz mit:

mehreren mobilen drahtlosen Transceivern (14, 16, 18, 19);
einem ortsfesten drahtlosen Transceiver (12), der eine drahtlose Kommunikation mit zumindest einigen der mobilen drahtlosen Transceiver (14, 16, 18, 19) bereitstellt, wobei der ortsfeste drahtlose Transceiver (12) dazu ausgelegt ist, im Betrieb Merkmale seiner Verbindungen mit allen oder einem Teilsatz der mobilen drahtlosen Transceiver (14, 16, 18, 19) zu überwachen;
wobei der ortsfeste drahtlose Transceiver (12) dazu ausgelegt ist, im Betrieb:

i) zwischen Kandidaten-Zweihop-Routen von einem ersten mobilen drahtlosen Transceiver zu dem ortsfesten drahtlosen Transceiver (12) auf der Grundlage der Merkmale seiner Verbindungen mit mobilen drahtlosen Transceivern (14, 16, 18, 19), welche Kandidaten zum Weiterleiten von Daten von dem ersten drahtlosen Transceiver an den ortsfesten drahtlosen Transceiver (12) sind, auszuwählen;

ii) dem ersten drahtlosen Transceiver anzugeben, welcher der mobilen drahtlosen Kandidaten-Transceiver (14 16, 18, 19) somit ausgewählt ist;

wobei die mobilen drahtlosen Transceiver (14, 16, 18, 19) dazu ausgelegt sind, im Betrieb Weiterleitungs-Signalisierungsnachrichten auszutauschen und für den ortsfesten drahtlosen Transceiver (12) Kandidaten-Zweihop-Routen von dem ersten mobilen drahtlosen Transceiver über jeweilige mobile drahtlose Kandidaten-Transceiver (14, 16, 18, 19) zu identifizieren.

2. Netz nach Anspruch 1, in dem die mobilen drahtlosen Transceiver (14, 16, 18, 19) dazu ausgelegt sind, Weiterleitungsnachrichten auszutauschen, indem sie einen ersten mobilen drahtlosen Transceiver (14, 16, 18, 19) aufweisen, der dazu ausgelegt ist, im Betrieb eine Weiterleitungs-Anfragenachricht an einen oder mehrere der mobilen drahtlosen Transceiver (14, 16, 18, 19) zu senden, und einen oder mehrere der mobilen drahtlosen Transceiver (14, 16, 18, 19) aufweisen, die dazu ausgelegt sind, im Betrieb eine Weiterleitungs-Angebotsnachricht als Reaktion auf den Empfang der Weiterleitungs-Anfragenachricht zu senden, wobei der ortsfeste drahtlose Transceiver (12) dazu ausgelegt ist, die Weiterleitungs-Angebotsnachricht zu empfangen.

3. Netz nach Anspruch 1, wobei die mobilen drahtlosen Transceiver (14, 16, 18, 19) Daten mit mehreren unterschiedlichen Datengeschwindigkeiten senden können, wobei die von dem ortsfesten drahtlosen Transceiver (12) überwachten Merkmale die Datengeschwindigkeit beinhalten, mit denen jeder mobile drahtlose Transceiver (14, 16, 18, 19) arbeitet, und die Auswahl zwischen Kandidaten-Zweihop-Routen durch den ortsfesten drahtlosen Transceiver (12) zumindest teilweise von der Datengeschwindigkeit abhängt, die von den mobilen drahtlosen Kandidaten-Transceivern (14, 16, 18, 19) beim Kommunizieren mit dem ortsfesten drahtlosen Transceiver (12) verwendet wird.

4. Netz nach Anspruch 1 oder 2, wobei die mobilen drahtlosen Transceiver (14, 16, 18, 19) Signale mit mehreren unterschiedlichen Übertragungsleistungen übertragen können, wobei die von dem ortsfesten drahtlosen Transceiver (12) überwachten Merkmale die Signalleistung, mit der jeder mobile drahtlose Transceiver (14, 16, 18, 19) an den ortsfesten drahtlosen Transceiver (12) überträgt, oder die Leistung des von jedem mobilen drahtlosen Transceiver (14, 16, 18, 19) an dem ortsfesten drahtlosen Transceiver (12) empfangenen Signals einschließen, wobei die Auswahl zwischen den Kandidaten-Zweihop-Routen zumindest teilweise abhängt von:

i) der von den mobilen drahtlosen Kandidaten-Transceivern (14, 16, 18, 19) beim Kommunizieren mit dem ortsfesten drahtlosen Transceiver (12) verwendeten Übertragungsleistung; oder

ii) der Leistung des Signals, das von den mobilen drahtlosen Kandidaten-Transceivern (14, 16, 18, 19) beim Kommunizieren mit dem ortsfesten drahtlosen Transceiver (12) empfangen wird.

5. Netz nach Anspruch 1, bei dem die mobilen drahtlosen Transceiver (14, 16, 18, 19) eine Benutzerschnittstelle anbieten, die es Benutzern erlaubt, aus dem Anbieten einer Weiterleitung an andere mobile drahtlose Transceiver (14, 16, 18, 19) auszusteigen.

6. Netz nach Anspruch 1 , weiterhin mit einem Benutzerkontoserver, der mit dem ortsfesten drahtlosen Transceiver (12) verbunden ist, wobei der Benutzerkontoserver dem Konto des Benutzers eines mobilen drahtlosen Transceivers (14, 16, 18, 19), welcher Daten für Benutzer von anderen mobilen drahtlosen Transceivern (14, 16, 18, 19) weiterleitet, eine Ermäßigung für den fälligen Betrag oder eine Erhöhung der Datenmenge gutschreibt, die der weiterleitende Benutzer in einer gegebenen Zeitspanne senden und/oder empfangen kann.

7. Netz nach Anspruch 1, bei dem das Weiterleiten nur in stromaufwärtiger Richtung ermöglicht ist.

## Revendications

1. Réseau cellulaire à sauts multiples comprenant :

une pluralité d'émetteurs-récepteurs mobiles sans fil (14, 16, 18, 19) ;
un émetteur-récepteur fixe sans fil (12) assurant la communication sans fil avec au moins certains desdits émetteurs-récepteurs mobiles sans fil (14, 16, 18, 19), ledit émetteur-récepteur fixe sans fil (12) étant agencé, en fonctionnement, pour surveiller les caractéristiques de ses liaisons avec tous les émetteurs-récepteurs mobiles sans fil (14, 16, 18, 19) ou un sous-ensemble de ceux-ci ;

ledit émetteur-récepteur fixe sans fil (12) étant agencé, en fonctionnement, pour:

i) choisir, parmi les routes à deux sauts candidates partant d'un premier émetteur-récepteur mobile sans fil vers ledit émetteur-récepteur fixe sans fil (12) sur la base desdites caractéristiques de ses liaisons avec des émetteurs-récepteurs mobiles sans fil (14, 16, 18, 19), ceux qui sont candidats pour relayer des données à partir dudit premier émetteur-récepteur sans fil vers ledit émetteur-récepteur fixe sans fil (12) ;

ii) indiquer audit premier émetteur-récepteur sans fil lequel parmi lesdits émetteurs-récepteurs mobiles sans fil candidats (14,16,18,19) a été ainsi choisi ;

lesdits émetteurs-récepteurs mobiles sans fil (14, 16, 18, 19) étant agencés, en fonctionnement, pour échanger des messages de signalisation de relais et pour identifier audit émetteur-récepteur fixe sans fil (12) des routes à deux sauts candidates à partir dudit premier émetteur-récepteur mobile sans fil via des émetteurs-récepteurs mobiles sans fil candidats respectifs (14, 16, 18, 19).

2. Réseau selon la revendication 1, dans lequel lesdits émetteurs-récepteurs mobiles sans fil (14, 16, 18, 19) sont agencés pour échanger des messages de relais grâce à l'agencement d'un premier émetteur-récepteur mobile sans fil (14, 16, 18, 19) pour envoyer, en fonctionnement, un message de demande de relais vers un ou plusieurs desdits émetteurs-récepteurs mobiles sans fil (14, 16, 18, 19), et grâce à l'agencement d'un ou plusieurs desdits émetteurs-récepteurs mobiles sans fil (14, 16, 18, 19) étant agencés pour envoyer, en fonctionnement, un message d'offre de relais en réponse à la réception dudit message de demande de relais, ledit émetteur-récepteur fixe sans fil (12) étant agencé pour recevoir ledit message d'offre de relais.

3. Réseau selon la revendication 1, dans lequel lesdits émetteurs-récepteurs mobiles sans fil (14, 16, 18, 19) peuvent envoyer des données à une pluralité de débits de données différents, lesdites caractéristiques surveillées par ledit émetteur-récepteur fixe sans fil (12) comprenant le débit de données auquel fonctionne chaque émetteur-récepteur mobile sans fil (14, 16, 18, 19), et ledit choix entre des routes à deux sauts candidates par ledit émetteur-récepteur fixe sans fil (12) étant dépendant, au moins en partie, du débit de données utilisé par lesdits émetteurs-récepteurs mobiles sans fil candidats (14, 16, 18, 19) en communication avec ledit émetteur-récepteur fixe sans fil (12).

4. Réseau selon la revendication 1 ou 2, dans lequel lesdits émetteurs-récepteurs mobiles sans fil (14, 16, 18, 19) peuvent émettre des signaux à une pluralité de puissances d'émission différentes, lesdites caractéristiques surveillées par ledit émetteur-récepteur fixe sans fil (12) comprenant la puissance du signal avec laquelle chaque émetteur-récepteur mobile sans fil (14, 16, 18, 19) émet vers ledit émetteur-récepteur fixe sans fil (12) ou la puissance du signal reçu en provenance de chaque émetteur-récepteur mobile sans fil (14, 16, 18, 19) au niveau de l'émetteur-récepteur fixe sans fil (12), ledit choix entre lesdites routes à deux sauts candidates étant dépendant au moins en partie de :

i) la puissance d'émission utilisée par lesdits émetteurs-récepteurs mobiles sans fil candidats (14, 16, 18, 19) en communication avec ledit émetteur-récepteur fixe sans fil (12) ; ou

ii) la puissance du signal reçu en provenance desdits émetteurs-récepteurs mobiles sans fil candidats (14, 16, 18, 19) en communication avec ledit émetteur-récepteur fixe sans fil (12).

5. Réseau selon la revendication 1 dans lequel lesdits émetteurs-récepteurs mobiles sans fil (14, 16, 18, 19) proposent une interface d'utilisateur qui permet aux utilisateurs de ne pas voir proposer le relais vers d'autres émetteurs-récepteurs mobiles sans fil (14,16,18,19).

6. Réseau selon la revendication 1, comprenant en outre un serveur de comptes d'utilisateur relié audit émetteur-récepteur fixe sans fil (12), ledit serveur de comptes d'utilisateur créditant le compte de l'utilisateur d'un émetteur-récepteur mobile sans fil (14, 16, 18, 19) qui effectue le relais de données pour des utilisateurs d'autres émetteurs-récepteurs mobiles sans fil (14, 16, 18, 19) avec un rabais sur le montant dû, ou une augmentation du volume de données que l'utilisateur effectuant le relais peut envoyer et/ou recevoir pendant une période de temps donnée.

7. Réseau selon la revendication 1, dans lequel le relayage n'est autorisé que dans un sens en amont.

Fig.1.

EP 1 856 856 B1

# Fig.2.

| Frame Control | Dur'n | Dest'n Address | Source Address | Other Party Address | BSSID | Relay Instance ID | Msg Type | Sequence Control | Data | FCS |
|---|---|---|---|---|---|---|---|---|---|---|
| (2) | (2) | (6) | (6) | (6) | (6) | (2) | (1) | (2) | (0-2312) | (4) |

# Fig.3.

| Sender Node ID | Receiver Node ID | Transmission Power (dBm) | Data Rate |
|---|---|---|---|
| 14 | AP | 6 | 11 |
| 16 | AP | 6 | 5.5 |
| 18 | AP | 4 | 1 |
| 19 | AP | 14 | 11 |

# Fig.4.

| Sender Node | Relay Instance ID | Relay Candidates | Time Remaining (ms) |
|---|---|---|---|
| 18 | 1 | 14,19 | 180 |

# Fig.5.

Send Long-Range
Relay Discovery Request
(20dBm) ⟩ 30

↓

Send Short-Range
Relay Discovery Request
(17dBm) ⟩ 32

↓

| Listen for Relay Specification | ─34 |

┆
↓

⟨ Receive Relay Specification
from Access Point - specifying:
i) Relay Address
ii) Transmission Power
iii) Data Rate ⟩ 36

↓

Send Frame as Specified:
Set Destination Address = Relay Node ─38
Set Source Address = This Device
Set Other Party Address = AP

↓

( END )

# Fig.6A.

Receive Short Range
Relay Request — 50

Relaying
Currently Offered
by This
Device? — 52

No → END — 54

Yes

Send Relay Offer
to Access Point — 56

Log Relay Instance ID
in Forwarding Table — 58

END

# Fig.6B.

Receive Frame with
Other Party = AP — 62

Relay
Instance ID
in Forwarding
Table? — 64

No → END — 66

Yes

Prepare Frame for Forwarding:
Set Other Party Address = Sender Address
Set Sender Address = This Device
Set Destination Address = AP — 68

Forward Frame
to Access Point — 70

Set forwarded flag in
forwarding table entry
=TRUE — 72

END — 74

# Fig.7A.

Receive Long Range
Relay Request —80

↓

Create Entry in Relay Table —82

↓

Start Countdown Timer
For Entry —84

# Fig.7B.

Receive Relay Offer —86

↓

Add Offer to Appropriate Entry
in Relay Table —88

↓

( END ) —90

# Fig.7C.

```
┌─────────────────────────┐
>  Countdown Timer        >
>  for Entry Expires      >
└─────────────────────────┘
            └─100
            │
            ▼
      ◇─────────────◇
     ╱  One or       ╲        No      ┌─────────────────────────┐
    ╱ More Candidates ╲──────────────▶│ Delete Entry in Relay Table│
    ╲ Present in Forwarding╱           └─────────────────────────┘
     ╲    Table?     ╱                              └─104
      ◇─────────────◇                               │
         └─102                                      ▼
         │ Yes                                  ╭───────╮
         ▼                                      │  END  │
┌─────────────────────────┐                     ╰───────╯
│  Choose Preferred Candidate│                      └─106
│  from Candidate Device in  │──108
│ Appropriate Entry in Relay Table│
└─────────────────────────┘
         │
         ▼
┌─────────────────────────┐
│ Send Relay Details to Relay Requester│──110
└─────────────────────────┘
         │
         ▼
     ╭───────╮
     │  END  │
     ╰───────╯
```

# Fig.7D.

```
┌─────────────────────────┐
>  Receive  Relayed       >──114
>      Frame              >
└─────────────────────────┘
            │
            ▼
┌─────────────────────────┐
│  Read Original Sender    │──116
│ from Other Party Address Field│
└─────────────────────────┘
            │
            ▼
┌─────────────────────────┐
│  Send Acknowledgement    │──118
│    to Original Sender    │
└─────────────────────────┘
            │
            ▼
        ╭───────╮
        │  END  │──120
        ╰───────╯
```

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Hao Zhu ; Guohong Cao.** On Improving the Performance of IEEE 802.1.1 with relay-enabled PCF. *journal Mobile Networks and Applications,* vol. 9, 423-434
- On improving the performance of 802.11 with multi-hop concepts. *proceedings of the 12th international conference on Computer Communications and Networks,* 2003
- *4th ACM MobiHoc conference,* 2003, 13-24
- **Seungjoon Lee ; Suman Banerjee ; Bobby Bhattacharjee.** The Case for a Multi-hop Wireless Local Area Network. *IEEE Infocom,* March 2004